# EUROPÄISCHE PATENTSCHRIFT

(11) **EP 1 926 570 B1**
(45) Veröffentlichungstag und Bekanntmachung des Hinweises auf die Patenterteilung: **07.03.2012**
(21) Anmeldenummer: 05785286.5
(22) Anmeldetag: 06.09.2005
(51) Int. Cl.: B23K 26/42, B23K 26/16, B23K 7/10, B23K 26/08

(54) **STRAHLFANGVORRICHTUNG FÜR EINE BEARBEITUNGSMASCHINE**
JET TRAPPING DEVICE FOR A CUTTING MACHINE
DISPOSITIF DE CAPTURE DE FAISCEAU POUR UNE MACHINE D'USINAGE

(43) Veröffentlichungstag der Anmeldung: 04.06.2008
(73) Patentinhaber: TRUMPF Werkzeugmaschinen GmbH + Co. KG, 71254 Ditzingen (DE)
(72) Erfinder: BLASER, Martin, 88267 Vogt (DE); PETERA, Martin, 71065 Sindelfingen (DE)
(74) Vertreter: Maser, Jochen
(86) Internationale Anmeldenummer: PCT/EP2005/009540
(87) Internationale Veröffentlichungsnummer: WO 2007/028403

(56) Entgegenhaltungen:
- WO-A-90/00952
- GB-A- 2 186 784
- GB-A- 2 186 784
- PATENT ABSTRACTS OF JAPAN Bd. 016, Nr. 321 (M-1279), 14. Juli 1992 (1992-07-14) & JP 04 091884 A (FUJITSU LTD), 25. März 1992 (1992-03-25) in der Anmeldung erwähnt

## Beschreibung

Die Erfindung betrifft eine Schneldstrahl-Bearbeitungsmaschine mit einer Strahlfangvorrichtung gemäß dem Oberbegriff des Anspruchs 1. JP 4-91884 A offenbart eine solche Schneidstrahl-Bearbeitungsmaschine.

Aus der WO 90/00952 A sowie aus der JP 4-91884 ist jeweils eine Bearbeitungsrnaschlne bekannt, bei der auf einer Werkstückauflage ein Werkstück zur Bearbeitung angeordnet ist. Dieses Werkstück wird über die Werkstückauflage quer zu einer Bearbeitungsrlchtung eines Schneidkopfes bewegt. Zur Bearbeitung des Werkstücks wird ein Schneidstrahl auf das Werkstück gerichtet, wobei bei der Bearbeitung des Werkstückes der Schneidstrahl auf der Unterseite austritt. Diesem Austrittsbereich ist ein Gehäuse mit einer Öffnung als Strahlfangvorrichtung zugeordnet, durch die der nach unten austretende Schneidstrahl in das Gehäuse eintritt. Die Öffnung und das Gehäuse erstrecken sich entlang des Arbeitsbereiches des Schneidkopfes.

Diese Strahlfangvorrichtung weist den Nachteil auf, dass der von dem Gehäuse aufgenommene, unten aus dem Werkstück während dem Bearbeiten austretende Schneidstrahl, insbesondere Laserstrahl oder Brennstrahl, nicht vollständig absorbiert wird. Des Weiteren kann eine Beeinflussung des Schneidstrahles durch Strahlreflexionen und durch nicht abtransportlerte Schlacke, Funken oder Restteile erfolgen. Darüber hinaus kann Schlacke, Staub und/oder Abbrand aufgrund der In dem Gehäuse aufgenommenen und noch nicht absorbierten Energie in der Strahlfangvorrichtung anhaften.

Der Erfindung liegt deshalb die Aufgabe zugrunde, eine Schneidstrahl-Bearbeitungsmaschine mit einer Strahlfangvorrichtung zu schaffen, bei der das Werkstück mit einem Schneidstrahl bearbeitet und der unten aus dem Werkstückträger austretende Schneidstrahl von der Strahlfangvorrichtung aufgefangenen wird, und durch die Strahlfangvorrichtung zumindest eine hohe Energieabsorption des Schneidstrahles ermöglicht ist.

Diese Aufgabe wird erfindungsgemäß durch die Merkmale des Anspruchs 1 gelöst. Weitere vorteilhafte Ausgestaltungen und Weiterbildungen der Erfindung sind in den weiteren Ansprüchen angegeben.

Durch die erfindungsgemäße Ausgestaltung der Schneidstrahl-Bearbeitungsmaschine mit einem Schneidkopf und mit einer Strahlfangvorrichtung, bei der in dem Gehäuse der Strahlfangvorrichtung ein relativ zur Öffnung bewegtes festes Medium vorgesehen ist, welches als umlaufendes Band im Gehäuse der Strahlfangvorrichtung ausgebildet ist, das den durch die Öffnung der Strahlfangvorrichtung in das Gehäuse eintretenden Schneidstrahl kreuzt, wird eine hohe Energieabsorption des Schneidstrahles erzielt. Dadurch kann ein thermisches Aufheizen der Werkstückauflagen im Maschinenbett der Bearbeitungsmaschine erheblich verringert werden. Zudem werden Beschädigungen an der Strahlfangvorrichtung verhindert. Gleichzeitig kann durch das umlaufende Band verhindert werden, dass selbst bei einer gleichbleibenden Bearbeitungsposition des Schneidstrahles eine lokale Erhitzung in dem Gehäuse erfolgt. Zusätzlich kann ein Abtransport von Abbrand, Schlacke, Staub zur mitgeführten Energie ermöglicht sein. Durch das umlaufende Band kann folglich eine fortwährende Energieabsorption des in die Öffnung des Gehäuse eintretenden Strahles gegeben sein.

Nach einer bevorzugten Ausgestaltung ist vorgesehen, dass das Band aus einem gut wärmeleitfähigen Material ausgebildet ist. Dadurch kann die aufgenommene Energie in dem Band schnell und gleichmäßig verteilt und abgeführt werden. Zusätzlich wird eine punktuelle Überhitzung verhindert.

Nach einer weiteren vorteilhaften Ausgestaltung der Erfindung ist vorgesehen, dass das Band als Metallband, als metallische Kette oder als metallisches maschenförmiges Gewebe ausgebildet ist. Dadurch kann eine hohe Standzeit und Robustheit erzielt werden, wobei eine gute Wärmeleitfähigkeit sichergestellt ist.

Bevorzugt ist bei einem flächenförmigen Bandmaterial eine strukturierte Oberfläche vorgesehen, die vorzugsweise mattiert, angeätzt, eine eingeprägte Struktur oder eine gewellte oder geriffelte Oberfläche aufweist. Dadurch wird die Oberfläche zur Energieabsorption vergrößert. Zusätzlich kann eine Streuung des auftreffenden Schneidstrahles erzielt werden, da eine diffuse Strahlreflexion erfolgt.

Das umlaufende Band ist nach einer bevorzugten Ausführungsform unterhalb der Öffnung des Gehäuses vorgesehen und erstreckt sich zumindest teilweise entlang der Öffnung. Dadurch kann eine kompakt bauende Anordnung vorgesehen sein. Gleichzeitig wird selbst bei einem sich geringfügig aufweitenden Schneidstrahl eine hohe Energleabsorption ermöglicht. Bevorzugt erstreckt sich das umlaufende Band entlang der Länge der Öffnung des Gehäuses. Dadurch kann mit einem umlaufenden Band der gesamte Bearbeltungsbereich des Schneidkopfes erfasst werden. Alternativ kann vorgesehen sein, dass mehrere einzelne umtaufende Bänder, die auch teilweise ineinander greifen können, entlang der Öffnung des Gehäuses zur Energieabsorption des Schneidstrahles angeordnet sind.

Nach einer weiteren bevorzugten Ausführungsform ist vorgesehen, dass das umlaufende Band im Wesentlichen parallel zur Öffnung des Gehäuses ausgerichtet ist und eine Laufrichtung umfasst, die parallel zur Bewegungsrichtung des Schneidkopfes verläuft. Dadurch kann sich ein schmales und langgestrecktes Band in der Strahlfangvorrichtung vorgesehen sein, so dass eine längere Umlaufzeit gegeben ist, bis ein Auftreffpunkt auf dem umlaufenden Band wieder unterhalb des Schneidkopfes positioniert ist. Alternativ kann vorgesehen sein, dass das umlaufende Band eine Bewegungsrichtung quer zur Langserstreckung der Öffnung des Gehäuses umfasst. Dadurch kann ein sehr breites, jedoch in der Länge kurz ausgebildetes Band eingesetzt werden, das im Wesentlichen durch zwei Umlenkrollen gehalten ist.

Das umlaufende Band, das im Wesentlichen parallel zur Bewegungsrichtung des Schneidkopfes ausgerichtet ist, wird in einer Laufrichtung entgegen der Bewegungsrichtung des Schneidkopfes angetrieben. Dadurch wird sichergestellt, dass eine hohe Energiesabsorption und Abführung von weiteren Bestandteilen erfolgt, die durch das Gehäuse aufgenommen werden. Gleichzeitig wird sichergestellt, dass das umlaufende Band gegenüber dem Schneidstrahl nicht still steht, um Beschädigungen des Bandes zu vermeiden.

Nach einer alternativen Ausgestaltung der Erfindung ist vorgesehen, dass das umlaufende Band, das im Wesentlichen parallel zur Bewegungsrichtung des Schneidkopfes ausgerichtet ist, in eine Laufrichtung angetrieben wird, welche der Bewegungsrichtung des Schneidkopfes entspricht, wobei die Bandgeschwindigkeit größer, vorzugsweise doppelt so groß, als die Verfahrgeschwindigkeit des Schneidkopfes ist. Dadurch kann in Analogie zur entgegengesetzten Laufrichtung des Bandes dieselbe Wirkung erzielt werden.

Nach einer weiteren vorteilhaften Ausführungsform der Erfindung ist vorgesehen, dass das umlaufende Band in wenigstens einer Raumrichtung gegenüber dem auf dem umlaufenden Band auftreffenden Schneidstrahl geneigt ausgerichtet ist. Dadurch kann eine Strahlreflexion abweichend vom Eintreffwinkel erzielt werden. Dies führt zu einer Streuung an einem Wandabschnitt des Gehäuses, wodurch eine weitere Energieabsorption erzielbar ist. Dieser Wandabschnitt kann gekühlt oder als Strahlfalle ausgebildet sein.

Nach einer ersten alternativen Ausführungsform eines geneigten Bandes ist vorgesehen, dass das umlaufende Band In oder entgegen dessen Transportrichtung ein Gefälle oder eine Steigung aufweist Alternativ hierzu kann vorgesehen sein, dass das umlaufende Band bei einer im Wesentliche parallelen Ausrichtung des Gehäuses eine seitliche Verkippung gegenüber einem vertikal eintreffenden Schneidstrahl aufweist. Analoge Ausführungsformen gelten auch für eine Laufrichtung des umlaufenden Bandes, welches quer zur Bewegungsrichtung des Schneidkopfes verlauft. Des Weiteren können die vorgenannten Alternativen auch überlagert sein. Durch die Verkippung des Transportbandes kann eine Rückreflexion des Schneidstrahles zum Schneidkopf verhindert werden.

Bevorzugt ist vorgesehen, dass das Gehäuse zumindest eine Absaugöffnung aufweist, an die eine Absaugvorrichtung anschließbar ist. Dadurch können die bei der Bearbeitung und Energieabsorption entstehenden Dämpfe abgesaugt werden. Gleichzeitig kann dadurch eine Kühlung erzielt werden, Indem über die Öffnung Umgebungsluft angesaugt wird, die entlang dem umlaufenden Band geführt wird oder das umlaufende Band umströmt.

Des Weiteren ist vorteilhafterwelse vorgesehen, dass das Gehäuse der Strahlfangvorrichtung zumindest eine Druckluftzuführung umfasst, die bevorzugt im großen Abstand zur Absaugung vorgesehen ist. Durch eine solche Druckluftzuführung können spezifische Bereiche des umlaufenden Bandes besonders gut gekühlt werden. Gleichzeitig kann dadurch erzielt werden, dass auf dem umlaufenden Band aufliegende Bestandteile, wie beispielsweise Abbrand, Schlacke oder Staub, abgeblasen werden, so dass ein Reinigungseffekt erzielt wird.

Die Druckluftzuführung erfolgt bevorzugt entgegen der Laufrichtung des umlaufenden Bandes. Dadurch kann eine Gegenstromkühlung erzielt werden. Diese Druckluftzuführung kann auch in dem umlaufenden Band integriert sein, so dass nicht nur einzelne Bereiche, sondern entlang einer gesamten Bahnstrecke eine Kühlung ermöglicht ist.

Das umlaufende Band ist nach einer vorteilhaften Ausgestaltung der Erfindung am jeweiligen Ende durch eine Umlenkrolle geführt, die einen kleinen Umlenkradius aufweist. Dadurch kann ein Selbstreinigungseffekt von eventuell anhaftender Schlacke erzielt werden. Durch die Biegung des Bandes in einem kleinen Radius bricht die spröde Schlacke ab einer bestimmten Dicke auf und löst sich selbständig vom Band.

Vorteilhafterweise ist an zumindest einem Ende, vorteilhafterweise an beiden Enden des umlaufenden Bandes, eine Auffangvorrichtung vorgesehen, die einen sogenannten Teile- oder Schlackesumpf bildet. Dadurch kann die Antriebsrichtung wahlweise erfolgen. Bevorzugt kann der Teile-/Schlackesumpf auch durchgehend sich unterhalb des umlaufenden Bandes erstrecken.

Eine vorteilhafte Weiterbildung der Erfindung sieht vor, dass am laufenden Band eine Bürste, ein Kratzer oder eine Schaber vorgesehen ist, der an der Oberfläche des Bandes angreift. Dadurch kann die Reinigung des Bandmaterials unterstützt werden, so dass ein langlebiger Einsatz des Bandes ermöglicht ist.

Nach einer weiteren vorteilhaften Ausgestaltung der Erfindung ist vorgesehen, dass entlang einer Längskante des Bandes zumindest abschnittsweise zumindest eine erste Borstenleiste vorgesehen ist, die eine geringe Anzahl von Borsten je Fläche aufweist und gegenüberliegend an der anderen Längskante des Bandes eine sich zumindest abschnittsweise erstreckende Borstenleiste gemäß einer großen Anzahl von Borsten angeordnet ist. Dadurch wird eine gezielte Luftführung beim Absaugen des Innenraumes des Gehäuses erzielt, wobei gleichzeitig ein Kühleffekt erzielt wird. Gleichzeitig wird eine Strömung quer zur Laufrichtung eines parallel zur Öffnung des Gehäuses ausgerichteten Band erzielt, wodurch die Kühlung beziehungsweise der Kühleffekt erhöht wird. Zusätzlich können Leitelemente vorgesehen sein, so dass die Absaugluft zwischen dem vor- und zurücklaufenden Bandabschnitt durchgeführt wird. Somit kann das gesamte Band gekühlt werden.

Nach einer weiteren vorteilhaften Ausgestaltung der Erfindung ist vorgesehen, dass Wandabschnitte zwischen der Öffnung des Gehäuses der Strahlfangvorrichtung und dem umlaufenden Band eine integrierte Kühlung, insbesondere eine Wasserkühlung, aufweisen. Dadurch kann eine zusätzliche Energieabsorption des reflektierten Schneidstrahles ermöglicht sein. Insbesondere bei einer Schrägstellung beziehungsweise Neigung oder Verkippung des Bandes kann an dem Wandabschnitt, der dem Ausfallswinkel des reflektierten Strahles zugewandt ist, eine besonders große Kühlung vorgesehen sein.

Das umlaufende Band ist gemäß einer Ausführungsform der Erfindung durch zwischen Umlenkrollen geführte Rollen geführt und über zumindest eine Spannrolle gespannt. Dadurch kann In Abhängigkeit der aufgenommenen Energie sichergestellt werden, dass eine hinreichende Bandspannung gegeben ist, um einen sicheren Betrieb zu ermöglichen. Alternativ kann vorgesehen sein, dass eine der Führungsrollen synchron zum Schneidkopf verfahrbar ausgebildet ist, wobei die Führungsrolle eine Verkippung eines Bandabschnitts zwischen den beiden Umlenkrollen bewirkt. Die Bandgeschwindigkeit des umlaufenden Bandes kann entsprechend den vorherigen Ausgestaltungsmöglichkeiten erfolgen. Diese Ausführungsform stellt eine alternative Ausgestaltung zur Verkippung des gesamten Laufbandes dar.

Die Erfindung sowie weitere vorteilhafte Ausführungsfonnen und Weiterbildungen derselben werden im Folgenden anhand der In den Zeichnungen dargestellten Beispiele näher beschrieben und erläutert. Die der Beschreibung und den Zeichnungen zu entnehmenden Merkmale können einzeln für sich oder zu mehreren In beliebiger Kombination erfindungsgemäß angewandt werden. Es zeigen:
- Figur 1: eine perspektivische Darstellung einer Bearbeitungsmaschine mit einer erfindungsgemäßen Strahlfangvorrichtung in eingebauter Position,
- Figur 2: eine perspektivische Darstellung der erfindungsgemäßen Strahlfangvorrichtung,
- Figur 3: einen schematischen Längsschnitt der Strahlfangvorrichtung gemäß Figur 2,
- Figur 4: eine schematische Ansicht im Querschnitt der Strahlfangvorrichtung gemäß Figur 2,
- Figur 5: eine schematische Ansicht im Querschnitt einer altemativen Ausführungsform zu Figur 4 und
- Figur 6: einen schematischen Längsschnitt der Strahlfangvorrichtung mit einer alternativen Anordnung eines umlaufenden Bandes zu Figur 3.

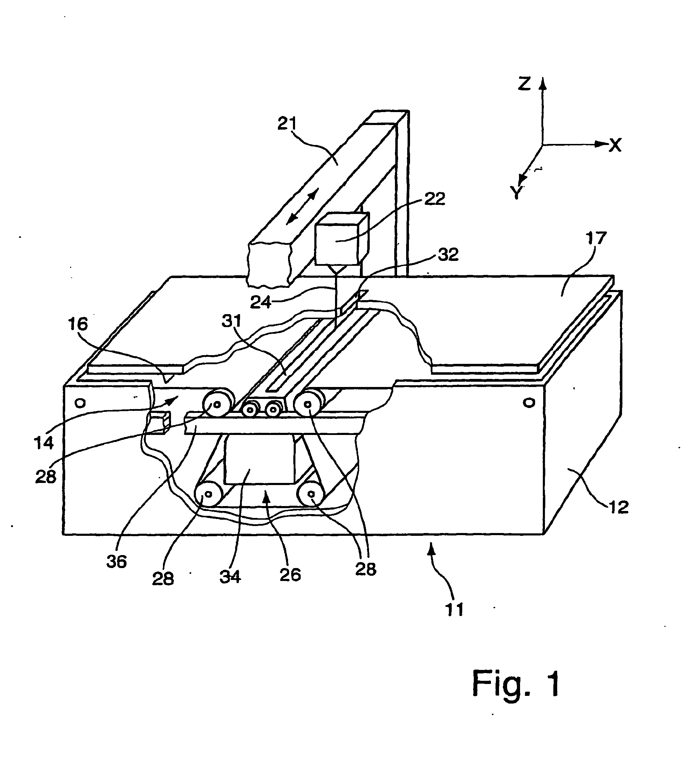

In Figur 1 ist perspektivisch eine Bearbeitungsmaschine 11 dargestellt. Diese Bearbeitungsmaschine 11 ist bevorzugt als Laserschneidmaschine ausgebildet. Alternativ kann eine Bearbeitungsmaschine mit einem Plasma-Strahl oder Brennstrahl vorgesehen sein. Ein Maschinenbett 12 umfasst eine Werkstückauflage 14, die beispielsweise gemäß Figur 1 durch ein Auflageband 16 ausgebildet ist, welches ruhend im Maschinenbett 12 gehalten ist. In einer alternativen Ausführungsform kann dieses Auflageband auch angetrieben sein und zusätzliche Transportfunktionen übernehmen. Über eine Linearachse 21 ist ein Schneidkopf 22 in Y-Richtung bewegbar und bildet einen Arbeitsbereich des Schneidkopfes 22. Zusätzlich kann eine Linearachse vorgesehen sein, die in und entgegen einer X-Richtung verfahrbar ist. Darüber hinaus kann auch eine In der Höhe verfahrbare Linearachse vorgesehen sein. Von dem Schneidkopf 22 aus wird ein Schneidstrahl 24 auf das Werkstück 17 gerichtet, um eine Bearbeitung durchzuführen.

Auf einer Unterseite des Werkstückes 17 ist im Bearbeitungsbereich des Schneidkopfes 22 eine Strahlfangvorrichtung 26 vorgesehen, die zwischen Umlenkrollen 28 des Auflagebandes 16 positioniert ist. Die Strahlfangvorrichtung 26 kann in einer besonderen Ausführungsform auf einer Führung 36 in und entgegen der X-Richtung verfahrbar sein, wobei die Strahlfangvorrichtung 26 an die Bewegung des Schneidkopfes 22 gekoppelt ist, beispielsweise durch einen eigenen Antrieb oder ohne eigenen Antrieb mitgeführt wird.

Die Strahlfangvorrichtung 26 weist eine Öffnung 31 auf, die zum Schneidkopf 22 gerichtet ist und sich bevorzugt entlang des gesamten Bearbeitungsbereiches des Schneidkopfes 22 in Y-Richtung erstreckt. Während der Bearbeitung des Werkstückes 17 kann der Schneidstrahl 24, der auf der Unterseite des Werkstückes 17 nach Einbringung eines Schneidspaltes 32 austritt, durch die Öffnung 31 von einem Gehäuse 34 der Strahlfangvorrichtung 26 aufgefangen werden.

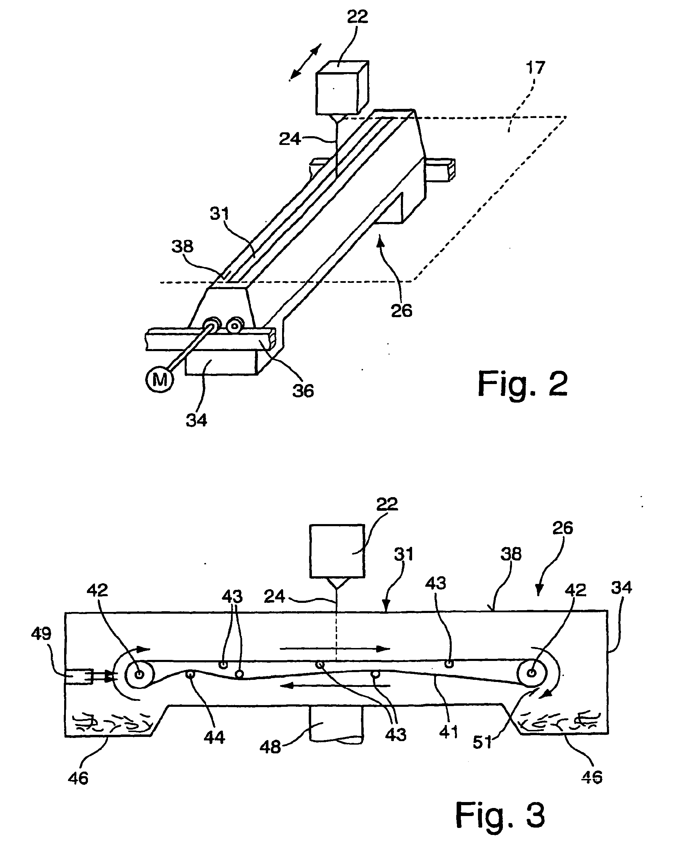

In Figur 2 ist eine perspektivische Ansicht der Strahlfangvorrichtung 26 dargestellt. Diese weist ein im Wesentlichen geschlossenes Gehäuse 34 auf, das an einer zum Werkstück 17 weisenden Stirnfläche 38 die Öffnung 31 umfasst.

In Figur 3 ist ein schematischer Längsschnitt der Strahlfangvorrichtung 26 gemäß Figur 2 dargestellt. In dem Gehäuse 34 der Strahlfangvorrichtung 26 ist beispielsweise ein umlaufendes Band 41 als bewegtes festes Medium 41 vorgesehen, das den Schneidstrahl 24 zur Energieabsorption kreuzt. Dieses umlaufende Band 41 besteht aus einem gut wärmeleitfähigen und/oder hitzebeständigem Material, das sich immer unter dem Strahlwerkzeug beziehungsweise Schneidkopf 22 während der Bearbeitung befindet. Dies ist bei der vorliegenden beispielhaft dargestellten Ausführungsform dadurch gegeben, dass die Länge des zur Öffnung 31 weisenden Bandes 41 zumindest der Länge der Öffnung 31 entspricht. Das umlaufende Band 41 umfasst am jeweiligen Ende Umlenkrollen 42. Dazwischen liegend sind Führungsrollen 43 vorgesehen, um das Band 41 zu stützen. Zusätzlich ist eine Spannrolle 44 vorgesehen, um eine vorgegebene Bandspannung aufrecht zu erhalten, die sich in Abhängigkeit der absorbierten Energie ändert. Zumindest eine der Umlenkrollen 42 kann gleichzeitig als Antriebsrolle ausgebildet sein.

Den jeweiligen Umlenkrollen 42 zugeordnet ist in dem Gehäuse 34 eine Auffangwanne 46 vorgesehen, die einen Teile-/Schlackesumpf bildet. An dem Gehäuse 34 ist zumindest eine Absaugöffnung 48 vorgesehen, die beispielsweise im mittleren Bereich des Gehäuses 34 angeordnet ist. Diese Absaugöffnung 48 kann an mehreren Stellen des Gehäuses 34 vorgesehen sein. Ebenso kann eine schlitzförmige Absaugöffnung sich teilweise oder entlang einer gesamten Gehäusefläche erstrecken oder an mehreren Gehäuseflächen vorgesehen sein. Durch die Absaugung ist ermöglicht, dass nicht nur eine Kühlung des Bandes 41, sondern auch eine Absaugung der entstehenden Gase und Stäube durch einen erzeugten Unterdruck ermöglicht ist. Zur zusätzlichen Kühlung kann zumindest eine Druckluftzuführung 49 vorgesehen sein, die beispielsweise gemäß Figur 3 der Umlenkrolle 42 zugeordnet ist, um eine Gegenströmung zur Erhöhung des Kühleffektes zu erzielen. Gleichzeitig kann dadurch ein Abblasen der Bandoberfläche ermöglicht werden.

Zur Erhöhung des Selbstreinigungseffektes ist vorgesehen, dass die Umlenkrollen 42 einen möglichst kleinen Radius aufweisen, damit die gegebenenfalls auf der Oberfläche des Bandes 41 anhaftende Schlacke bricht und sich selbständig ablöst. Zusätzlich kann bevorzugt im Bereich der Auffangwanne 46 ein Kratzer 51, temperaturbeständige Bürsten oder ein Schieber vorgesehen sein, um weitere Bestandteile von der Bandoberfläche zu entfernen.

Nach einer ersten Ausführungsform der Erfindung ist vorgesehen, dass die Laufrichtung des Bandes 41 entgegengesetzt zur Bewegungsrichtung des Schneidkopfes 22 erfolgt. Durch diese Steuerung des Schneidkopfes 22 und des umlaufenden Bandes 41 kann ein Stillstand des umlaufenden Bandes 41 zum Schneidstrahl 24 im bewegten System nicht gegeben sein, so dass eine hohe Energieabsorption aufgrund des umlaufenden Bandes 41 gegeben ist. Alternativ kann vorgesehen sein, dass das umlaufende Band 41 gleichlaufend zur Bewegungsrichtung des Schneidkopfes 22 vorgesehen ist. Dabei ist vorgesehen, dass die Ansteuerung der Bandgeschwindigkeit größer ist als die Verfahrgeschwindigkeit des Schneidkopfes 22. Des Weiteren kann vorgesehen sein, dass eine Kombination oder eine beliebige Abfolge im Wechsel der Bewegungsrichtungen unter den vorgegebenen Prämissen zur Bewegungsrichtung des Schneidkopfes 22 angesteuert wird.

Alternativ kann vorgesehen sein, dass anstelle eines umlaufenden Bandes 41 ein band- oder streifenförmiges Material vorgesehen ist, weiches eine hin und her Bewegung durchführt, der gleichzeitig noch eine rechwinklige Bewegungsrichtung überlagert ist. Des Weiteren kann alternativ eine umlaufende Schnecke oder dergleichen vorgesehen sein.

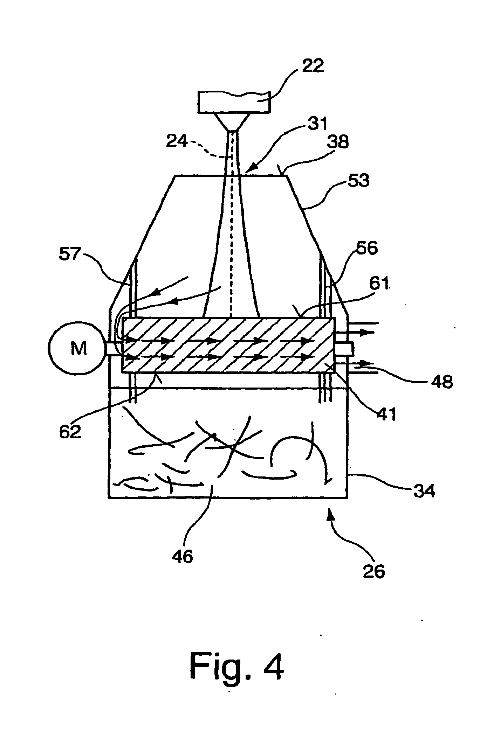

In Figur 4 ist ein schematischer Querschnitt der Strahlfangvorrichtung 26 gemäß Figur 3 dargestellt. Das Gehäuse 34 weist an die Stirnfläche 38 sich anschließend geneigte Wandabschnitte 53 auf, die sich zumindest bis zum Band 41 erstrecken. Durch diese schräg ausgebildeten Wandabschnitte 53 wird eine Schlackeanhaftung verringert beziehungsweise verhindert.

Zur verbesserten Kühlung ist beispielsweise vorgesehen, dass entlang einer Längskante des Bandes 41 eine Borstenleiste 56 mit einer hohen Anzahl von Borsten vorgesehen ist, die einen sogenannten dichten Vorhang bildet. Gegenüberliegend ist eine Borstenleiste 57 mit einer geringen Anzahl von Borsten vorgesehen, wodurch eine Art luftdurchlässiger Vorhang erzielt wird. Dadurch kann ein gezielter Strömungsverlaüf gemäß den eingezeichneten Pfeilen ermöglicht werden, wodurch die Kühlung des Bandes 41 erhöht ist. Aufgrund der umgelenkten Strömung zwischen einem oberen und unteren Bandabschnitt 61, 62 kann eine optimale Kühlung gegeben sein.

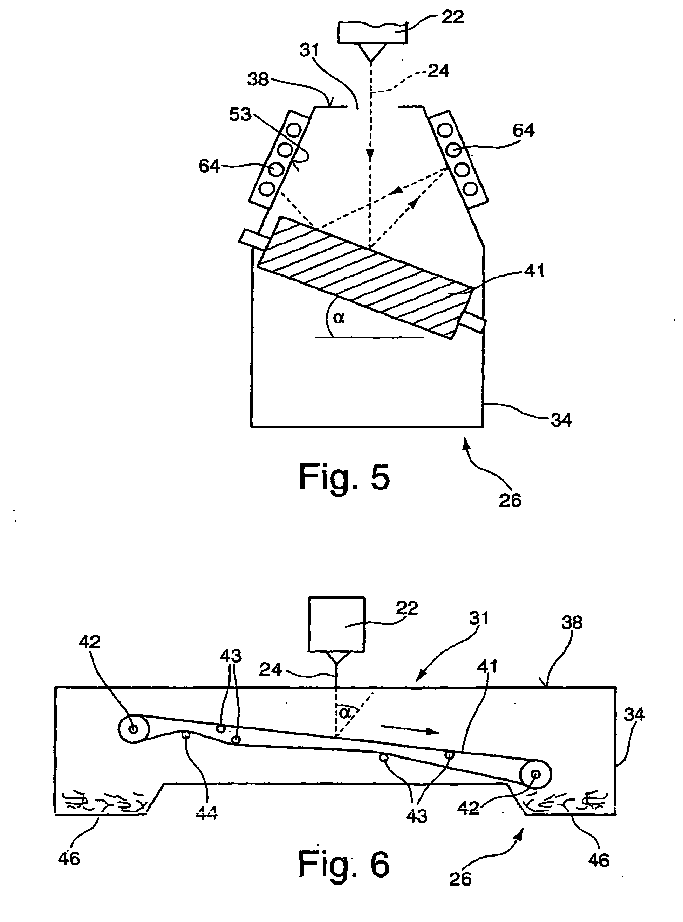

In Figur 5 ist eine alternative Ausführungsform zu Figur 4 dargestellt. Bei dieser Ausführungsform ist das umlaufende Band 41 gegenüber dem Schneidstrahl 24 geneigt. Dadurch erfolgt eine Strahlreflexion des Schneidstrahles 24 in Richtung auf einen Wandabschnitt 53. Die Wandabschnitte 53 umfassen eine Kühlung, Insbesondere Wasserkühlung 64, wodurch eine weitere Energieabsorption ermöglicht ist. Eine solche geneigte Anordnung des Bandes 41 weist den Vorteil der Streuung des in das Gehäuse 34 eintretenden Schneidstrahles 24 auf, wodurch zusätzlich zur Energieabsorption am umlaufenden Band 41 eine weitere Energieabsorption durch die Kühlung gegeben ist.

In Figur 6 ist eine alternative Ausführungsform zu Figur 4 dargestellt. Die Neigung oder Verkippung des Bandes 41 erfolgt in Bewegungsrichtung des umlaufenden Bandes 41. Dadurch wird ebenfalls eine Streuung des eintreffenden Schneidstrahles 24 ermöglicht. Eine Überlagerung der Verkippungen gemäß den Figuren 4 und 5 kann ebenso vorgesehen sein.

Durch die erfindungsgemäße Strahlfangvorrichtung 26, die auch als sogenannter Catcher beziehungsweise Liniencatcher bezeichnet werden, ist eine Energleabsorptionsvorrichtung geschaffen, die zusätzlich eine Absaugfunktion aufweisen kann, um die bei der Strahlbearbeitung entstehenden Rest- und Abfallstoffe wie Schlacken, Funken, Bearbeitungsgase usw. und die vom Werkstück 17 nicht absorbierte Energie aufzunehmen und abzuleiten, um sich nachteilig auf den Schneidstrahl 24 auswirkende Strahlreflexionen zu vermeiden.

## Patentansprüche

1. Schneidstrahl-Bearbeitungsmaschine mit einer Werkstückauflage (14) mit einem Schneidkopf (22), der in Y-Richtung bewegbar ist und einen Arbeitsbereich des Schneidkopfes (22) bildet, und mit einer Strahlfangvorrichtung (26), die im Arbeitsbereich des Schneidkopfes (22) vorgesehen ist, welche ein Gehäuse (34) mit einer Öffnung (31) aufweist, so dass ein Schneidstrahl (24) von dem Schneidkopf (22), der beim Bearbeiten eines Werkstücks (17) aus der Unterseite des Werkstücks (17) austritt, durch die Öffnung (31) in das Gehäuse (34) eintritt, und in dem Gehäuse (34) ein relativ zur Öffnung (31) des Gehäuses (34) bewegtes festes Medium vorgesehen ist, das zur Energieabsorption den in das Gehäuse (34) eintretenden Schneidstrahl (24) kreuzt, **dadurch gekennzeichnet, dass** in dem Gehäuse (34) der Strahlfangvonichtung (26) ein umlaufendes Band (41) vorgesehen ist, das den Schneidstrahl (24) kreuzt.

2. Schneidstrahl-Bearbeitungsmaschine nach Anspruch 1, **dadurch gekennzeichnet, dass** das umlaufende Band (41) aus einem gut wärmeleitfahigen Material ausgebildet ist.

3. Schneldstrahl-Bearbeitungsmaschine nach Anspruch 1 oder 2, **dadurch gekennzeichnet, dass** das umlaufende Band (41) als Metallband, als metallische Kette oder als metallisches, maschenförmiges Gewebe ausgebildet ist.

4. Schneidstrahl-Bearbeitungsmaschine nach einen der vorhergehenden Ansprüche, **dadurch gekennzeichnet, dass** ein flächenförmiges Band (41) eine strukturierte Oberfläche aufweist, die vorzugsweise mattiert, angeätzt, eine geprägte Struktur oder eine gewellte oder geriffelte Oberfläche aufweist.

5. Schneidstrahl-Bearbeitungsmaschine nach einem der vorhergehenden Ansprüche, **dadurch gekennzeichnet, dass** das umlaufende Band (41) sich unterhalb der Öffnung (31) des Gehäuses (34) zumindest teilweise, vorzugsweise vollständig, entlang deren Länge erstreckt.

6. Schneldstrahl-Bearbeitungsmaschine nach einem der vorhergehenden Ansprüche, **dadurch gekennzeichnet, dass** das umlaufende Band (41) im Wesentlichen parallel zur Öffnung (31) des Gehäuses (34) ausgerichtet ist und eine Laufrichtung parallel zur Bewegungsrichtung des Schneidkopfes (22) umfasst.

7. Schneidstrahl-Bearbeitungsmaschine nach einem der vorhergehenden Ansprüche, **dadurch gekennzeichnet, dass** das umlaufende Band (41) in eine Laufrichtung entgegen der Bewegungsrichtung des Schneidkopfes (22) angetrieben ist.

8. Schneidstrahl-Bearbeitungsmaschine nach einem der Ansprüche 1 bis 6, **Dadurch gekennzeichnet, dass** das umlaufende Band (41) In eine Laufrichtung gleichsinnig zur Bewegungsrichtung des Schneidkopfes (22) mit einer Geschwindigkeit angetrieben ist, die größer als die Verfahrgeschwindigkeit des Schneidkopfs (22) ist.

9. Schneidstrahl-Bearbeitungsmaschine nach einem der vorhergehenden Ansprüche, dadurch gekenntzeichnet, dass das umlaufende Band (41) In wenigstens einer Raumrichtung gegenüber dem auf das umlaufende Band (41) auftreffenden Schneidstrahl (24) geneigt ist und vorzugsweise in oder entgegen dessen Transportrichtung ein Gefälle oder eine Steigung aufweist.

10. Schneidstrahl-Bearbeitungsmaschine nach Anspruch 6, **dadurch gekennzeichnet, dass** das umlaufende Band, das im Wesentlichen parallel zur Öffnung (31) des Gehäuses (34) ausgerichtet ist, eine seitliche Verkippung gegenüber einem einfallenden Schneidstrahl (24) aufweist.

11. Schneidstrahl-Bearbeitungsmaschine nach einem der vorhergehenden Ansprüche, **dadurch gekennzeichnet, dass** das Gehäuses (34) der Strahlfangvorrichtung (26) zumindest eine Absaugöffnung (48) aufweist, an der eine Absaugvorrichtung anschließbar ist und vorzugsweise zumindest eine Druckluftzuführung (49) umfasst, die bevorzugt entgegen der Laufrichtung des umlaufenden Bandes (41) Druckluft einbläst.

12. Schneidstrahl-Bearbeitungsmaschine nach einem der vorhergehenden Ansprüche, **dadurch gekennzeichnet, dass** dem umlaufenden Band (41) ein Kratzer (51), eine Bürste oder ein Schaber zugeordnet ist, die an der Oberfläche des Bandes (41) angreifen.

13. Schneidstrahl-Bearbeitungsmaschine nach einem der vorhergehenden Ansprüche, **dadurch gekennzeichnet, dass** entlang einer Längskante des umlaufenden Bandes (41) zumindest abschnittsweise eine erste Borstenleiste (57) vorgesehen ist, die eine geringe Anzahl von Borsten je Fläche aufweist und gegenüberliegend eine sich zumindest abschnittsweise erstreckende Borstenleiste (56) mit einer großen Anzahl von Borsten je Fläche vorgesehen ist.

14. Schneidstrahl-Bearbeitungsmaschine nach einem der vorhergehenden Ansprüche, **dadurch gekennzeichnet, dass** das umlaufende Band (41) durch mehrere zwischen zwei Umlenkrollen (42) angeordneten Führungsrollen (43) geführt und über zumindest eine Spannrolle (41) unter Spannung gehalten ist.

## Claims

1. A cutting-beam processing machine comprising a workpiece rest (14), a cutting head (22), which is movable in Y-direction and provides a processing region of the cutting head (22) and further comprising a beam catching device (26), which is provided in the processing region of the cutting head (22) and comprising a housing (34) with an opening (31) so that a cutting beam (24) from the cutting head (22), which is discharged from the underside of the workpiece (17), is entering the housing (34) through the opening (31) and in the housing (34), a solid medium moving relative to the opening (31) of the housing (34) is provided and said solid medium crossing the cutting beam (24) in order to absorb energy, **characterized in that** a circulating band (41) which crosses the cutting beam (24) is provided in the housing (34).

2. The cutting-beam processing machine as claimed in claim 1, **characterized in that** the circulating band (41) is made of a material which is a good conductor of heat.

3. The cutting-beam processing machine as claimed in claim 1 or 2, **characterized in that** the circulating band (41) is designed as a metal band, as a metallic chain or as a metallic, mesh-like fabric.

4. The cutting-beam processing machine as claimed in one of the preceding claims, **characterized in that**
a planar band (41) has a structured surface which, preferably dulled and slightly etched, has an embossed structure or a corrugated or fluted surface.

5. The cutting-beam processing machine as claimed in one of the preceding claims, **characterized in that** the circulating band (41) extends below the opening (31) of the housing (34) at least partly, preferably completely, along its length.

6. The cutting-beam processing machine as claimed in one of the preceding claims, **characterized in that** the circulating band (41) is oriented essentially parallel to the opening (31) of the housing (34) and comprises a running direction parallel to the direction of movement of the cutting head (22).

7. The cutting-beam processing machine as claimed in one of the preceding claims, **characterized in that** the circulating band (41) is driven in a running direction against the direction of movement of the cutting head (22).

8. The cutting-beam processing machine as claimed in one of claims 1 to 6, **characterized in that** the circulating band (41) is driven in the same direction as the direction of movement of the cutting head (22) at a speed which is greater than the traverse speed of the cutting head (22).

9. The cutting-beam processing machine as claimed in one of the preceding claims, **characterized in that** the circulating band (41) is inclined in at least one spatial direction relative to the cutting beam (24) striking the circulating band (41) and preferably has a gradient or a slope in or against the transport direction (18).

10. The cutting-beam processing machine as claimed in claim 6, **characterized in that** the circulating band, which is oriented essentially parallel to the opening (31) of the housing (34), is tilted laterally relative to an incoming cutting beam (24).

11. The cutting-beam processing machine as claimed in one of the preceding claims, **characterized in that** the housing (34) has at least one extraction opening (48), to which an extraction device is attached and preferably comprises at least one compressed-air feed (49), which preferably blows in compressed air against the running direction of the circulating band (41).

12. The cutting-beam processing machine as claimed in one of the preceding claims, **characterized in that** a scraper (51), a brush or a slide is assigned to the circulating band (41) and acts on the surface of the band (41).

13. The cutting-beam processing machine as claimed in one of the preceding claims, **characterized in that** a first bristle strip (57) is provided at least in sections along a longitudinal edge of the circulating band (41), said first bristle strip (57) having a small number of bristles per surface, and provided opposite said first bristle strip (57) is a bristle strip (56) which extends at least in sections and has a large number of bristles per surface.

14. The cutting-beam processing machine as claimed in one of the preceding claims, **characterized in that** the circulating band (41) is guided by a plurality of guide rollers (43) arranged between two deflection rollers (42) and is kept under tension via at least one tensioning roller (44).

## Revendications

1. Machine d'usinage à jet de coupe comprenant un porte-pièce (14), une tête de coupe (22) qui peut être déplacée en direction y et forme un rayon d'action de la tête de coupe (22), et un dispositif de capture de jet (26) qui est prévu dans le rayon d'action de la tête de coupe (22) et qui présente un carter (34) avec une ouverture (31) de sorte qu'un jet de coupe (24) provenant de la tête de coupe (22), lequel sort, lors de l'usinage d'une pièce à usiner (17), de la face inférieure de la pièce à usiner (17), pénètre par l'ouverture (31) dans le carter (34) et que dans le carter (34) est prévu un milieu solide, mobile par rapport à l'ouverture (31) du carter (34), qui croise le jet de coupe (24) pénétrant dans le carter (34) pour en absorber l'énergie, **caractérisée en ce que** dans le carter (34) du dispositif de capture de jet (26) est prévu un tapis roulant (41) qui croise le jet de coupe (24).

2. Machine d'usinage à jet de coupe selon la revendication 1, **caractérisée en ce que** le tapis roulant (41) est réalisé en un matériau ayant une bonne conductibilité thermique.

3. Machine d'usinage à jet de coupe selon la revendication 1 ou 2, **caractérisée en ce que** le tapis roulant (41) est réalisé sous forme de bande métallique, de chaîne métallique ou de tissu maillé métallique.

4. Machine d'usinage à jet de coupe selon l'une quelconque des revendications précédentes, **caractérisée en ce qu'**un tapis (41) planiforme présente une surface structurée qui est de préférence dépolie, décapée ou qui présente une structure gaufrée ou une surface ondulée ou cannelée.

5. Machine d'usinage à jet de coupe selon l'une quelconque des revendications précédentes, **caractérisée en ce que** le tapis roulant (41) s'étend au-dessous de l'ouverture (31) du carter (34), et ce au moins partiellement, de préférence entièrement, le long de sa longueur.

6. Machine d'usinage à jet de coupe selon l'une quelconque des revendications précédentes, **caractérisée en ce que** le tapis roulant (41) est orienté essentiellement parallèlement à l'ouverture (31) du carter (34) et comporte un sens de marche parallèle au sens de déplacement de la tête de coupe (22).

7. Machine d'usinage à jet de coupe selon l'une quelconque des revendications précédentes, **caractérisée en ce que** le tapis roulant (41) est actionné dans un sens de marche opposé au sens de déplacement de la tête de coupe (22).

8. Machine d'usinage à jet de coupe selon l'une quelconque des revendications de 1 à 6, **caractérisée en ce que** le tapis roulant (41) est actionné dans un sens de marche correspondant au sens de déplacement de la tête de coupe (22) avec une vitesse qui est supérieure à la vitesse d'avance de la tête de coupe (22).

9. Machine d'usinage à jet de coupe selon l'une quelconque des revendications précédentes, **caractérisée en ce que** le tapis roulant (41) est incliné dans au moins une direction dans l'espace par rapport au jet de coupe (24) heurtant le tapis roulant (41) et présente de préférence dans son sens de transport ou dans le sens opposé à celui-ci une pente descendante ou une pente ascendante.

10. Machine d'usinage à jet de coupe selon la revendication 6, **caractérisée en ce que** le tapis roulant qui est orienté essentiellement parallèlement à l'ouverture (31) du carter (34) présente une inclinaison latérale par rapport à un jet de coupe (24) incident.

11. Machine d'usinage à jet de coupe selon l'une quelconque des revendications précédentes, **caractérisée en ce que** le carter (34) du dispositif de capture de jet (26) présente au moins un orifice d'aspiration (48) auquel peut être raccordé un dispositif d'aspiration, et comprend de préférence au moins une amenée d'air comprimé (49) qui insuffle de l'air comprimé de préférence dans le sens opposé au sens de marche du tapis roulant (41).

12. Machine d'usinage à jet de coupe selon l'une quelconque des revendications précédentes, **caractérisée en ce qu'**au tapis roulant (41) est affecté(e) un racloir (51), une brosse ou un grattoir qui agit sur la surface du tapis (41).

13. Machine d'usinage à jet de coupe selon l'une quelconque des revendications précédentes, **caractérisée en ce qu'**il est prévu, au moins partiellement le long d'une arête longitudinale du tapis roulant (41), une première barre porte-poils (57) qui présente un faible nombre de poils pour une surface donnée, et **en ce qu'**il est prévu, sur le côté opposé, une barre porte-poils (56) s'étendant au moins partiellement avec un grand nombre de poils pour une surface donnée.

14. Machine d'usinage à jet de coupe selon l'une quelconque des revendications précédentes, **caractérisée en ce que** le tapis roulant (41) est guidé par plusieurs rouleaux de guidage (43) disposés entre deux rouleaux de renvoi (42) et est maintenu sous tension par au moins un rouleau de tension (41).
